# EUROPEAN PATENT SPECIFICATION

(11) **EP 4 076 894 B1**
(45) Date of publication and mention of the grant of the patent: **10.12.2025**
(21) Application number: 20835900.0
(22) Date of filing: 18.12.2020
(51) Int. Cl.: B29C 45/16, B29C 45/00, B29C 45/74, B29C 45/78, B29C 45/77, B29C 45/73, B29C 45/14

(54) **INJECTION MOLDING METHOD AND APPARATUS FOR THE PRODUCTION OF A DOUBLE LAYERED COMPONENT MADE OF PLASTIC MATERIAL**
SPRITZGIESSVERFAHREN UND VORRICHTUNG ZUR HERSTELLUNG EINES DOPPELSCHICHTIGEN BAUTEILS AUS KUNSTSTOFF
PROCÉDÉ DE MOULAGE PAR INJECTION ET DISPOSITIFE POUR LA FABRICATION D'UN COMPOSANT DOUBLE COUCHE EN MATIÈRE PLASTIQUE

(30) Priority: 20.12.2019 IT 201900025117
(43) Date of publication of application: 26.10.2022
(73) Proprietor: De' Longhi Appliances S.r.l. Con Unico Socio, 31100 Treviso (IT)
(72) Inventor: MAZZON, Renzo, 31100 TREVISO (IT); VISENTIN, Silvio, 31100 TREVISO (IT)
(74) Representative: Petraz, Gilberto Luigi
(86) International application number: PCT/IT2020/050315
(87) International publication number: WO 2021/124371

(56) References cited:
- EP-A1- 2 159 031
- EP-A1- 2 333 421
- CN-A- 110 480 934
- JP-A- 2019 202 537
- JP-A- S63 317 315
- US-A- 5 045 268
- US-A1- 2010 124 002
- US-A1- 2016 374 488

## Description

### FIELD OF THE INVENTION

Embodiments described here concern a method and an apparatus for the production of a component having a body comprising two overlapping layers of plastic material.

The component in particular is suitable to be used as a containing body, or casing, of a household appliance, such as for example a kettle, a toaster, a vacuum cleaner, a coffee machine, a blender, an iron, or suchlike.

### BACKGROUND OF THE INVENTION

In the field of household appliances it is known to produce components, or finished objects, having two or more layers of plastic material at least partly overlapping each other, in order to provide a determinate aesthetic appearance. These components can be used to form the external structure of artefacts, or objects, such as for example, but not limited to, household appliances for home use, or also carafes, bowls, and suchlike.

The ever increasing focus on aesthetic research in the design and production of household appliances for home use to satisfy the tastes of consumers is also known, providing an aesthetic appearance that is attractive, recognizable and which allows to stand out from similar solutions on the market.

For example, components are known that define the containing body of a kettle, comprising a first layer of transparent plastic material and a second layer of metal material on which a plurality of through holes are made, through which the first layer, and therefore the inside of the kettle itself, is visible.

This solution, however, requires the first layer and the second layer to be made separately, and then coupled and connected to one another, with consequent problems of reciprocal coupling and seal.

This aesthetic research has also led to the production of household appliances with an external structure made of plastic material consisting of two layers overmolded one on the other in a single body.

Methods to produce components of household appliances are also known, which provide to inject a first layer of plastic material and subsequently a second layer of plastic material. For example, the first injected layer can be of transparent material while the second layer can be of colored and/or opaque material.

In particular, the second layer of material can be injected only partly with respect to the totality of the external surface of the component to be obtained, so as to keep the first injected layer at least partly visible, in order to give the final product a pleasant and sought after aesthetic appearance. Or the first layer of injected material can be colored and/or opaque and the second layer can be of transparent or semi-transparent material, so as to make the underlying layer of injected material visible.

Or the material to be used has technical characteristics of the mechanical and/or thermal and/or aesthetic type that do not make it suitable for contact with foodstuffs, and therefore cannot be used for the first layer.

Articles are also known, such as for example bowls or cutlery handles, comprising a first layer of material, which is completely covered by a second layer of material, wherein the first layer has a greater thickness than the second layer and acts as a structural component, while the second layer acts as an aesthetic surface finish.

The overmolding of the second layer of material on the first layer of material can be problematic. In fact, during the overmolding of the second layer on the first layer, so-called "washing" phenomena of the first layer can occur, with consequent aesthetic problems, which are particularly visible if the external layer is at least partly transparent.

The overmolding of material can be even more complex in the case of so-called bi-injection processes, in which the step of injecting the second material is carried out immediately downstream of the step of injecting the first layer of material.

Due to the temperature at which the second material is to be melted, in fact, a second unwanted melting of the underlying layer of material previously injected can occur, in those zones where the cooling speed is lower.

In order to prevent problems of re-melting of the internal layer, known solutions provide to produce the latter with materials having a higher melting point than that of the material used for the external layer.

These solutions imply the use of more noble materials for the internal layer, which is less evident and not in contact with the user, with consequent increases in cost.

Documents EP 2333421 A1, US 5045268 A, JP 2019 202537 A concern methods for the production of components made of plastic material by means of bi-injection of two materials.

Document JP S63 317315 A concerns an element made of plastic material for manufacturing the cover of a light, which has a diamond-cut finish.

US 2010/124002 A1 concerns a component made of plastic material for a video camera.

Document US 2016/374488A I concerns cutlery made with plastic material.

Document EP 2159031 A1 discloses a mold and method for manufacturing double-layered preforms by overmoulding and relative double-layer preform.

The solutions described in these documents are not suitable to manufacture a component made of plastic material such as a casing, or a containing body, of a household appliance, in particular for a kettle or a toaster, in which it is necessary for the containing body to be suitable to withstand temperatures equal to or higher than 100 °C.

There is therefore the need to perfect a method for the production of a component made of plastic material that can overcome at least one of the disadvantages of the state of the art.

Another purpose is to provide a method for the production of a component made of plastic material that is fast and allows high productivity and efficiency.

Another purpose of the present invention is to perfect a method for the production of a component made of plastic material comprising an internal layer and an external layer, preventing possible "washing" effects and re-melting of the internal layer.

Another purpose is to perfect a method for the production of a component made of plastic material which allows to obtain components with a colored internal layer, and a shiny and transparent external layer, substantially free of defects.

Another purpose is to perfect a method for the production of a component made of plastic material that is effective and economical, allowing to obtain high productivity and at the same time to reduce overall costs.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

In accordance with the above purposes, the present invention concerns a method and an apparatus to produce a component made of plastic material suitable to make up the containing body, the casing, the shell, the external structure and/or the external body or at least part thereof, of household appliances for home use.

Examples of application of the component according to the invention can be, for example, household appliances such as a kettle, toaster, vacuum cleaner, electric brushes, blenders, microwave ovens, electric ovens, fryers, teapots, coffee machines, ice cream machines, kneading machines, hair dryers, irons and suchlike.

A component according to the invention comprises a body made of plastic material comprising a first internal layer of a first material, and a second external layer of a second material, which at least partly covers the first internal layer.

According to some embodiments, the second layer completely covers the first layer.

According to the invention, the second external layer has a greater thickness than the first internal layer.

According to the invention, the component has a tubular shape, with a circular, polygonal or oval section, or having a perimeter comprising a combination of straight segments and curved segments. Furthermore, the component can have, along an axial development, a constant section or a variable section, with concave or convex portions.

According to some embodiments, the first material can be opaque, or have a color, or a plurality of colors, while the second material can be at least partly transparent, allowing the first opaque layer to be visible through it. This allows to confer a three-dimensional and partly convex appearance on the final component.

According to other embodiments, not claimed, the second transparent external layer extends, at least in an axial direction, beyond an end edge of the first internal layer. In this way, the component has a transparent peripheral strip, which confers an effect of transparency and lightness.

According to some embodiments, not claimed, the second external layer can extend beyond the edges of the internal layer, itself defining, on its own, one or more portions of the body, such as for example a pouring spout, or a handle in the case of a kettle, or a carafe, or other ornamental parts.

A method for producing a component made of plastic material according to the invention comprises:
- a first step of injecting a first plastic material into a first molding volume, defined between a punch and a first matrix, with first operative parameters comprising a first injection temperature, and a first injection pressure, to make a first internal layer having a first thickness;
- a second step of injecting a second plastic material into a second molding volume defined between the internal layer obtained in the first step and a second matrix, with second operative parameters comprising a second injection temperature, and a second injection pressure, to make a second external layer having a second thickness, wherein the second thickness is greater than the first thickness of the first internal layer.

Providing the second external layer with a thickness greater than the first internal layer allows to obtain a lower resistance to the filling flow of the second material, and therefore to reduce the so-called shear stress phenomena of the material, preventing the formation of possible aesthetic defects caused by the mechanical friction of the material due to rubbing against the wall of the mold and the material of the first layer.

Providing the second layer with a thickness greater than the first layer also allows to obtain three-dimensional finishes thereon, which confer a particular distinctive aesthetic appearance on the component made of plastic material.

According to some embodiments, the first material and the second material have homogeneous physical properties.

According to preferred embodiments, the first material is opaque, while the second material is at least partly transparent, allowing the first layer to be visible through it.

This combination of opaque material and transparent material allows to confer a three-dimensional and partly convex effect on the final component.

The operative parameters of the second injection step are different from the operative parameters of the first injection step.

According to the invention, at least one of either the second injection temperature or the second injection pressure are lower than the respective first injection temperature and second injection temperature.

In this way, by stressing the first layer less in terms of temperature/pressure, the occurrence of possible washing effects and re-melting of the first material is prevented, thus preventing possible contaminations of the second material.

The second injection temperature and the second injection pressure are both respectively lower than the first injection temperature and the first injection pressure.

According to the invention, the second injection temperature is 5-10% lower than the first injection temperature.

Providing a second layer having a greater thickness allows to decrease the injection temperature, since the greater mass of second material allows to maintain the heat during the filling of the second molding volume, without generating unwanted junction lines.

According to the invention, the second injection pressure is 10-30% lower than the first injection pressure.

Since the second molding volume has a greater thickness than the first molding volume, this allows to make the second material flow even with lower pressure.

According to the invention, the method provides to cool the first layer of the first material with a first cooling temperature, and to cool the second layer of the second material with a second cooling temperature, lower than the first cooling temperature.

The present invention also concerns an apparatus for the production of a component made of plastic material of the type described above, which comprises:
- a first molding assembly, comprising a punch and a first matrix suitable to define between them a first molding volume having a first width, and a first injection unit configured to inject a first plastic material into the first molding volume;
- a second molding assembly, comprising a second matrix configured to define, together with the first layer of material, a second molding volume having a second width and a second injection unit configured to inject a second plastic material into the second molding volume.

According to the present invention, the second width is greater than the first width.

According to the invention, the first injection unit comprises heating means configured to heat the first plastic material to a first injection temperature and an injection device configured to inject the first material with a first injection pressure, and the second injection unit comprises heating means configured to heat the second plastic material to a second injection temperature and an injection device configured to inject the second material with a second injection pressure.

According to the invention, the first and second heating means are able to be activated and adjusted independently of each other.

According to the invention, the first molding unit and the second molding unit comprise respectively a first cooling circuit and a second cooling circuit, independent of each other, and able to be selectively set in order to cool the first material and the second material with respective cooling temperatures, wherein the second cooling temperature is lower than the first cooling temperature.

### ILLUSTRATION OF THE DRAWINGS

These and other aspects, characteristics and advantages of the present invention will become apparent from the following description of some embodiments, given as a non-restrictive example with reference to the attached drawings wherein:
- fig. 1 is a schematic view of a component in accordance with one embodiment of the present invention, applied to a household appliance, in the example shown a kettle;
- fig. 2 is a section view of fig. 1 along the section line II-II;
- fig. 3 is an enlarged detail of a portion of fig. 2;
- fig. 4 is a schematic view of a component in accordance with another embodiment of the present invention applied to a different household appliance, in the example case a toaster;
- fig. 4a is a three-dimensional view of a detail of a component according to the invention in accordance with other embodiments;
- fig. 4b is a three-dimensional view of a portion of the component according to another embodiment;
- fig. 4c is a three-dimensional view of a portion of the component according to another embodiment;
- fig. 5 is a schematic view of an apparatus for the production of a component made of plastic material according to some embodiments;
- fig. 6 is a vertical section view of a component according to the invention at the end of a first step of injecting a first material;
- fig. 7 is a vertical section view of a component according to the invention at the end of a second step of injecting a second material;
- fig. 8 is an enlarged detail of the apparatus of fig. 5 during the first injection step;
- fig. 9 is a section view of the apparatus of fig. 5 along the section line IX-IX;
- fig. 9a is an enlarged detail of fig. 9;
- fig. 10 is a section view along the line X-X in fig. 6;
- fig. 11 is a section view of the apparatus of fig. 5 along the section line XI-XI;
- fig. 12 is a section view along the line XII-XII of fig. 7.

### DESCRIPTION OF SOME EMBODIMENTS

We will now refer in detail to the possible embodiments of the invention, of which one or more examples are shown in the attached drawings. Each example is supplied by way of illustration of the invention and shall not be understood as a limitation thereof.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

The attached drawings are used to describe embodiments of a component 10 made of plastic material suitable to make up the containing body, the casing, the shell, the external structure and/or the external body, or at least part thereof, of household appliances 50 for home use, or other objects, such as, for example bowls, carafes, thermos flasks, and suchlike.

In the description we will refer to household appliances such as a kettle 50A and a toaster 50B.

The component 10 according to the invention comprises a first internal layer 11 and a second external layer 12 at least partly overlapping the first internal layer 11.

According to some embodiments, the component 10 has only two layers, first 11 and second 12.

According to preferred embodiments, the first layer 11 and the second layer 12 can be made of plastic materials, for example heat-resistant polymeric materials.

According to possible embodiments, the first layer 11 and the second layer 12 can be made with materials having similar characteristics and properties.

According to possible embodiments, the first layer 11 and the second layer 12 can be made with materials having non homogeneous characteristics and properties.

According to some embodiments, for example applicable to household appliances for processing foodstuffs, the first layer 11 and the second layer 12 can be made with resins suitable for applications in the field of foodstuffs such as for example polypropylene.

According to possible embodiments, it can be provided that only the first layer 11 is suitable for applications in the field of foodstuffs while the second layer 12 is not.

According to other embodiments, as a function of the applications, the first layer 11 and/or the second layer 12 can be made with thermoplastic resins of different nature.

According to some embodiments, the first layer 11 can be made with a first opaque material, or with a color, or a plurality of colors, while the second layer 12 can be made with a second at least partly transparent material, allowing the first internal opaque layer 11 to be visible through it.

By transparent or semi-transparent layer we mean that it can be passed through in all its thickness by luminous radiations allowing objects located beyond it to be visible.

This allows to confer a three-dimensional and partly convex appearance on the final component 10.

In accordance with some embodiments, the first layer 11 and the second layer 12 can be obtained by means of bi-injection processes.

The first layer 11 has a first thickness S1 and the second layer 12 has a second thickness S2, which is greater than the first thickness S1.

According to some embodiments, the first thickness S1 and the second thickness S2 can be defined as the maximum thicknesses of the respective layer.

Advantageously, the ratio between the second thickness S2 of the second layer 12 and the first thickness S1 of the first layer 11 can be comprised in a range from 1.05 to 2.5, more preferably from 1.1 to 2.

The first layer 11 comprises a first surface 13 defining an internal surface of the component 10 and facing, during use, toward the inside of the household appliance 50.

The first layer 11 also comprises a second surface 14, opposite the first surface 13, on which the second external layer 12 is positioned in contact.

According to some embodiments, the first internal surface 13 can have a smooth and uniform development, that is, without notches and/or protrusions.

The second layer 12 has an external surface 15 which defines, during use, an external surface of the component 10, opposite the internal surface 13, and therefore an external surface of the household appliance 50 on which it is applied.

According to some embodiments, the external surface 15 has a three-dimensional finish, and comprises at least one portion from which a plurality of aesthetic reliefs 16 extend, suitable to confer a pleasant aesthetic appearance on the component 10.

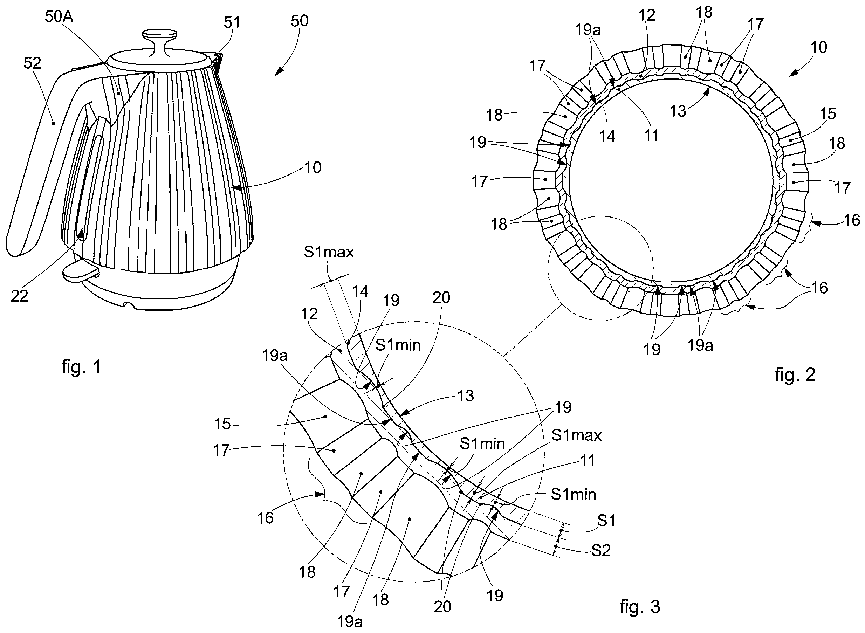

Examples of possible embodiments of the aesthetic reliefs 16, for example shown in figs. 1, 2, 3, 4, 4a and 4b, can comprise reliefs in the shape of parallel ribs, bubbles, or hemispheres, diamond-shaped workings, or other geometric or non-geometric shapes.

In particular, the external surface 15 has an alternation of protruding portions 17 and recessed portions 18 which confer the three-dimensional appearance on the component 10 and, in general, on the household appliance 50.

According to some embodiments, the protruding portions 17 and the recessed portions 18 correspond, respectively, to zones of the component 10 with differentiated thickness with respect to the internal surface 13.

According to a possible embodiment, the protruding portions 17 are configured as vertical ribs adjacent to each other and disposed substantially parallel to each other.

According to possible variants, ribs disposed horizontally, or oblique, or also protrutions or reliefs with a helix or spiral-shaped development can be provided.

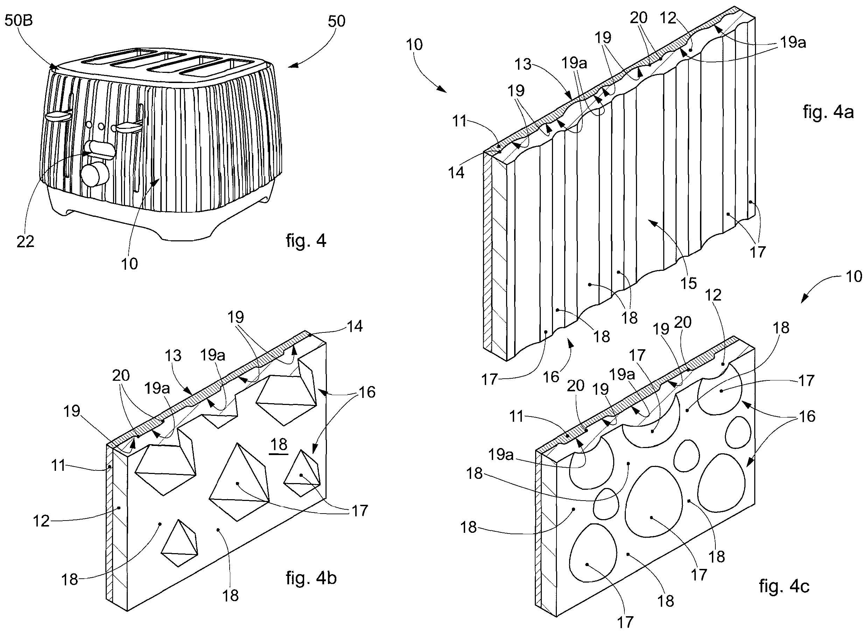

According to another embodiment, shown in fig. 4a, the protruding portions 17 can be configured as portions of spheres, or bubbles, adjacent to each other, distributed uniformly or according to a desired disposition.

According to a further embodiment, shown in fig. 4b, the protruding portions 17 can be configured as polygonal-based pyramids, in this specific case of a rectangular type, adjacent to each other.

According to other variants, not shown, the reliefs 16 can take on other shapes, even non-geometric ones, for example flowers, hearts, and suchlike.

According to the invention, the component 10 has a tubular shape.

The cross section of the component 10, as a function of needs or the application, can have a circular, polygonal, or oval shape, or with a perimeter comprising a combination of rectilinear and curved segments.

Furthermore, the component 10 can have a constant cross section along an axial development, or variable with concave or convex portions.

According to other embodiments, the component 10 can have an open curved shape, and be configured to be connected to other similar components 10, or even to different elements, in order to make up, together, a containing body, or a casing, of a household appliance 50.

According to some embodiments, the second external layer 12 completely covers the first internal layer 11.

In other possible embodiments, not claimed, the second layer 12 has an external end edge 23 which extends, in an axial direction X, beyond an internal end edge 24 of the first layer 11.

More in particular, in said embodiments, a portion of the second layer 12 in fact protrudes in the axial direction beyond the first layer 11.

In this way, the component 10 has a peripheral strip 25 having a single layer made with the second material, in particular of the transparent type. This transparent peripheral strip 25 confers a light and three-dimensional appearance on the component 10.

According to other embodiments, not claimed, the second layer 12 can extend, with respect to the main body of the component 10, in other parts, such as for example the pouring spout 51 or the handle 52 of a kettle 50A, in order to confer a further sense of lightness. According to some embodiments, the first internal layer 11 comprises, made in its thickness, filling channels, or cavities 19.

The filling channels or cavities 19 have a shape and position correlated to those of the recessed portions 18 of the external surface 15.

In particular, the filling cavities 19 can be made in the thickness of the first layer 11, in correspondence with the second surface 14, so as to follow the shape of the external surface 15 of the second layer 12 defined by the aesthetic reliefs 16, that is by the alternation between the protruding portions 17 and the recessed portions 18.

In other words, the second surface 14 of the first layer 11 comprises flat portions 19a interspersed with the filling cavities 19, which have a shape and position coherent respectively with those of the protruding portions 17 and of the recessed portions 18 of the second layer 12.

The first thickness S1 has a minimum value S1 min in correspondence with the filling cavities 19 that are aligned with the recessed portions 18, and a maximum value S1max in correspondence with the flat portions 19a that are aligned with the protruding portions 17 of the second layer 12.

In the case of a component 10 with a tubular shape, the filling cavities 19 will be aligned with the respective recessed portions in a radial direction.

As a function of the shape and size of the reliefs 16, the first thickness S1 can vary directly between the minimum value S1min and the maximum value S1 max, or it can take on intermediate values.

According to some embodiments, the maximum value S1max can be 20-50% greater than the minimum value S1min.

Advantageously, the filling cavities 19 are able to compensate, at least in part, for the differences in thickness between the protruding portions 17 and the recessed portions 18.

In other words, the second external layer 12 has a substantially constant thickness along the transverse extension of the component 10 or, in any case, a substantially constant average thickness, with the exception of small deviations with respect to an average value, for example of the order of 10-20%.

The first internal layer 11 has an average thickness variable in a transverse direction of the component 10.

According to some embodiments, the transition zones 20, interposed between portions of the second surface 14 comprising the filling cavities 19 and portions of the second surface 14 not comprising the filling cavities 19, can be configured with a beveled shape, as shown for example in fig. 3.

Advantageously, the transition zones 20 with a beveled shape prevent, or at least limit, during the step of injecting the second material to produce the second layer 12, concentrations of heat and therefore unwanted re-melting of the first material which makes the first layer 11.

In this way, the erosion caused by the mechanical rubbing generated by the flow of the second material is also reduced.

According to some embodiments, not claimed, the component 10 can comprise a transparent window 22 suitable to allow a user to look through it.

For example, in the case of a kettle 50A, by means of the transparent window 22, the user can check the level of water contained in the containing body consisting of the component 10.

In other forms of application, the window 22 can be configured to allow the user to see possible additional features of the household appliance, for example a thermostat or a timer of a 50B toaster.

In other forms of embodiment, the window 22 can be configured to allow the user to see possible internal parts of the household appliance 50 and/or to have visibility of the product being cooked, or also verify the accumulation of dust in a collection container of a vacuum cleaner.

According to some embodiments, the window 22 can be made directly by means of a second transparent external layer 12.

In particular, the first layer 11 can contain an aperture 21, or a slot shaped substantially with the shape of the window 22 to be obtained.

On the contrary, the second layer 12 which, in fact, covers the first layer 11 can be obtained so as to completely cover the aperture 21 or slot, in continuity with the external surface 15.

According to possible solutions, the component 10 can provide a different surface finish of the second layer 12 in correspondence with the window 22, for example a substantially flat and smooth finish, to allow a better visibility through it.

Advantageously, the window 22 thus made does not require any particular assemblies, or any packing or other devices able to guarantee its hermetic seal. In fact, the window 22 thus made guarantees an optimal seal and prevents possible liquids, steam, or dust contained in the household appliance both from leaking from the inside toward the outside, and also, conversely, from penetrating from the external environment into the internal one.

Embodiments described here with reference to figs. from 5 to 12 also concern an apparatus 26 for the production of the component 10.

The apparatus 26 comprises a first molding assembly 27 configured to make the first layer 11 and a second molding assembly 28 configured to make the second layer 12.

In one embodiment of the apparatus 26, the first molding assembly 27 is positioned adjacent, adjoining and close to the second molding assembly 28.

According to some embodiments, the first molding assembly 27 and the second molding assembly 28 are located sequentially one after the other, and can be made to function in direct temporal succession in order to obtain the finished component 10 with a single process.

The first molding assembly 27 comprises a punch 29 and a first molding matrix 30 suitable to cooperate so as to define a first molding volume V1 between them, and a first injection unit 31 configured to inject the first plastic material into the first molding volume V1.

According to some embodiments, the first molding volume V1 has a first maximum width W1ₘₐₓ coherent with the first thickness S1 of the first layer 11.

The first injection unit 31 comprises first heating means 53 configured to heat the first plastic material to a first injection temperature T1.

According to some embodiments, the punch 29 has a contrast surface 32 configured to define, in negative, the shape of the internal surface 13 of the first layer 11 of the component 10.

According to some embodiments, the contrast surface 32 can be substantially uniform and smooth.

By way of example, in the case of a component 10 suitable to make a kettle 50A, the punch 29 can have a substantially truncated cone shape, whereas in the case of a component 10 suitable to make a toaster 50B, the punch 29 can have the shape of a parallelepiped with quadrangular cross section.

The first matrix 30 comprises a first molding surface 33 configured to define, in negative, the shape of the second surface 14 of the first layer 11.

According to some embodiments, the first molding matrix 30 can comprise one or more first molding cheeks 37 configured to be positioned, during use, one adjacent to the other so as to define a single first molding surface 33 of the first molding matrix 30.

According to some embodiments, the first molding surface 33 comprises at least one portion having first molding ridges 38 protruding, during use, inside the first molding volume V1.

The first molding ridges 38 define, in negative, the shape of the filling cavities 19 to be made in the first layer 11.

According to some embodiments, the second molding assembly 28 comprises a second molding matrix 34 having a second molding surface 35 suitable to define, in negative, the shape of the external surface 15 of the component 10.

The second molding matrix 34 is suitable to cooperate, during use, with the second surface 14 of the first layer 11 of material, to define a second molding volume V2 between them.

The second molding volume V1 has a second width W2ₘₐₓ, coherent with the second thickness S2 of the second layer 12, which is greater than the first width W1ₘₐₓ.

According to some embodiments, the ratio between the second width W2ₘₐₓ and the first width W1ₘₐₓ is comprised between 1.05 and 2.5, preferably between 1.1 and 2.

The second molding assembly 28 also comprises a second injection unit 36 configured to inject the second plastic material into the second molding volume V2.

The second injection unit 36 comprises second heating means 54 configured to heat the second plastic material to a second injection temperature T2.

The first heating means 53 and the second heating means 54 are able to be activated and adjusted independently of each other.

According to some embodiments, the second molding matrix 34 comprises one or more second molding cheeks 39.

In particular, the second molding cheeks 39 are configured to be positioned, during use, one adjacent to the other so as to define a single second molding surface 35 of the second molding matrix 34.

According to some embodiments, on at least one portion of said second molding surface 35, multiple cavities 40a are made alternating with respective molding reliefs 40b.

In particular, the cavities 40a and the molding reliefs 40b are able to define, in negative, the shape of the aesthetic reliefs 16 present on the external surface 15.

The cavity 40a and the molding reliefs 40b therefore have a shape and size correlated to the shape and final size of the protruding portions 17 and of the recessed portions 18 of the external surface 15.

The cavities 40a and the molding reliefs 40b are correlated with the molding ridges 38 of the first molding matrix 30.

In other words, the cavities 40a and the molding reliefs 40b of the second molding matrix 34 have a shape, sizes and position coordinated with those of the molding ridges 38 of the first molding matrix 30.

In particular, the molding reliefs 40b are positioned, during use, in positions correlated with those of the molding ridges 38.

According to some embodiments, the first molding cheeks 37 and the second molding cheeks 39 are replaceable so that components 10 with different aesthetic shapes can be produced with the same apparatus 26.

For example, a plurality of sets of first molding cheeks 37 and second molding cheeks 39 having different surface finishes can be provided, as a function of the final appearance the component 10 has to have.

According to other embodiments, not claimed, the first molding assembly 27 comprises at least one coupling protuberance 41 configured to define, in the first layer 11, an aperture 21, or a slot, or an empty portion, without the first material, and at the same time keep the punch 29 and the first matrix 30 separate from each other.

According to some embodiments, the at least one coupling protuberance 41 is provided on one of the first molding cheeks 37.

In particular, the coupling protuberance 41 is configured to cooperate with the punch 29 so as to confine and limit a portion of the first molding volume V1 and prevent access of the first material therein.

According to some embodiments, the coupling protuberance 41 is configured to produce a coupling and a minimum contact with the punch 29, in order to preserve the finish and the shine of the contrast surface 32 of the punch 29.

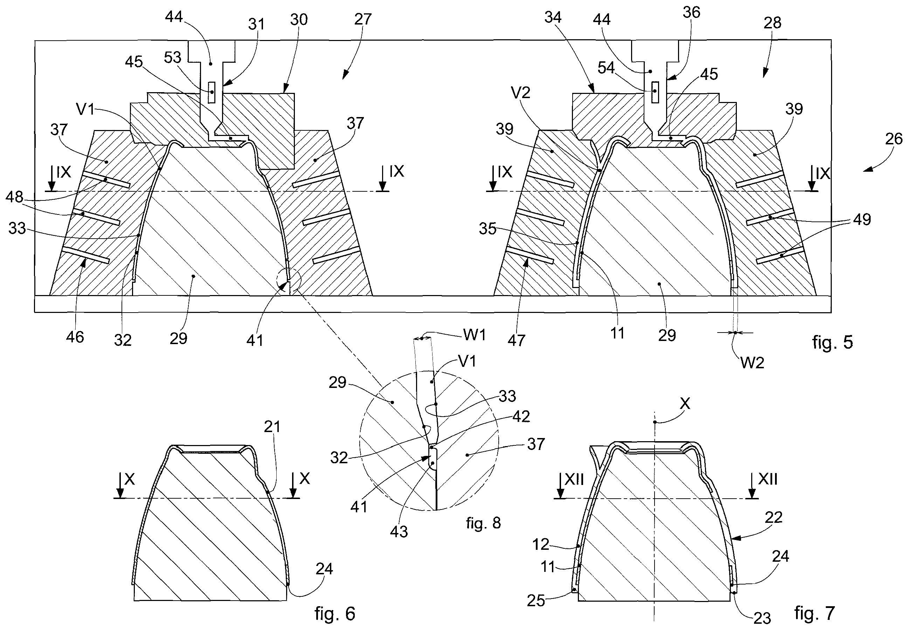

According to some embodiments, for example described with reference to fig. 8, the coupling protuberance 41 comprises at least one protruding abutment element 42, suitable to be positioned in contact with the contrast surface 32 of the punch 29, so as to define an empty space, or cavity 43 between the punch 29 and the respective first molding surface 33.

According to further embodiments, the coupling protuberance 41 can be provided on the punch 29, possibly providing to make the cavity 43 between the punch 29 and the first matrix 30 on the punch 29, and more specifically along the contrast surface 32.

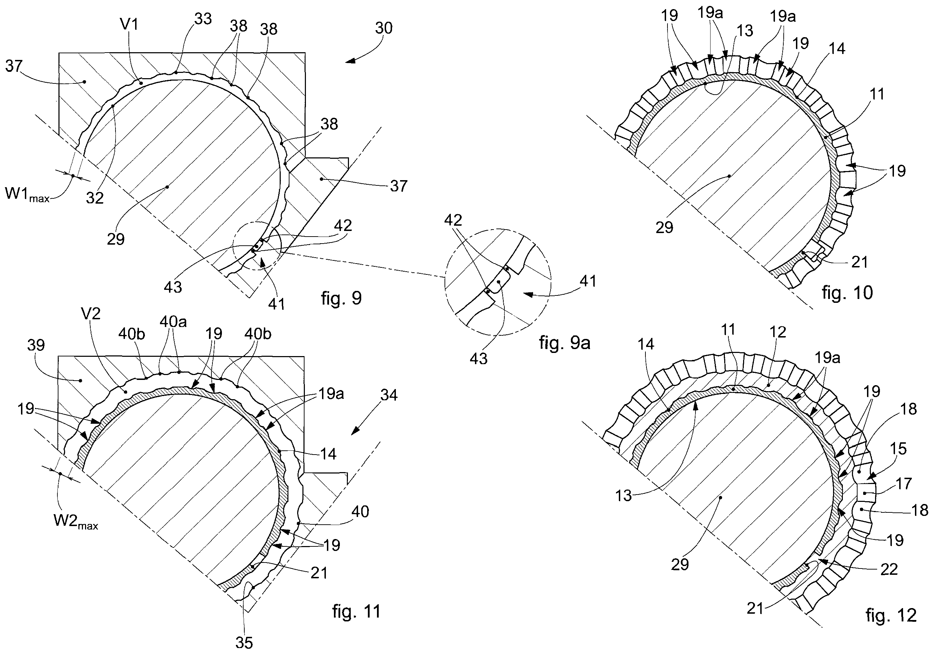

According to some embodiments, for example described with reference to fig. 10, the coupling protuberance 41 can comprise a pair of abutment elements 42, or even one annular-shaped abutment element, suitable to delimit the cavity 43, separating it from the first molding volume V1.

The abutment elements 42, during use, are configured to rest and press against the surface 32 of the punch 29 so as to guarantee the hermetic seal of the cavity 43.

In this way, the first molding volume V1 is limited in the corresponding zones in which an aperture 21 is provided in the first layer 11.

According to some embodiments, the cavity 43 can have a height, defined by the distance between the respective facing surfaces of the punch 29 and the first matrix 30, comprised between a few hundredths and a few tenths of a millimeter.

According to some embodiments, the abutment elements 42 have a width of a few tenths of a millimeter, for example comprised between 0.2 and 1.5 mm.

A width value comprised between 0.2 and 0.9 mm allows to reduce the contact between the punch 29 and the matrix 30 to a minimum, obtaining a cavity 43 with a larger area.

A slightly greater width value, for example comprised between 0.9 and 1.5, allows, with the only disadvantage being a small reduction in the area of the cavity 43, to guarantee a hermetic seal between the punch 29 and the matrix 30 even with lower closing forces, or in the case of workings that require a lower degree of precision.

According to some embodiments, one or more coupling protuberances 41 can be present, having the same or different shapes from each other, as a function of the shape and size of the aperture 21 to be obtained.

For example, in the case of a component 10 applied to a kettle 50A, there can be a first coupling protuberance 41, suitable to make the window 22 for controlling the water level (fig. 10), a second coupling protuberance 41 for making the spout 51, and a third coupling protuberance 41 for making the transparent peripheral strip 25 (fig. 10).

In some embodiments, the abutment element 42 can be shaped according to the shape of the window 22 to be obtained in the component 10.

In other embodiments, the abutment element 42 can be shaped so as to define the shape of the end edge 24 of the first layer 11.

Advantageously, the cavity 43 present between the punch 29 and the first molding matrix 30 allows to preserve the finish and the shine of the contrast surface 32 of the punch 29, even after several molding cycles.

According to some embodiments, the first injection unit 31 and the second injection unit 36 each comprise at least one injection device 44 and at least one injection channel 45 able to fluidly connect a respective injection device 44 with one of either the first injection volume V1 or the second injection volume V2.

According to some embodiments, a plurality of injection devices 44 for each injection unit 31, 36 can also be provided.

According to some embodiments, at least one injection channel 45 is made in at least one of the first molding cheeks 37, and in at least one of the second molding cheeks 39.

According to the invention, the apparatus 26 comprises, for each molding assembly 27, 28, a respective first cooling circuit 46 and a second cooling circuit 47.

The first cooling circuit 46 and the second cooling circuit 47 are independent of each other, and are configured to cool respectively the first layer 11 and the second layer 12 with respective cooling temperatures T3, T4 different from each other.

The first cooling circuit 46 is configured to cool the first layer 11 with a first cooling temperature T3 and the second cooling circuit 47 is configured to cool the second layer 12 with a second cooling temperature T4 lower than the first cooling temperature T3.

The first cooling circuit 46 comprises one or more cooling channels 48 and a unit for pumping a refrigerant fluid, or a heat exchanger with a refrigerating circuit, of the known type and not shown in the drawings.

The second cooling circuit 47 comprises one or more cooling channels 49 and a unit for pumping a refrigerant fluid, or a heat exchanger with a refrigerating circuit, of a known type and not shown in the drawings.

According to some embodiments, the cooling channels 48, 49 can be made through in at least one of the first molding cheeks 37, and/or second molding cheeks 38 and/or in the punch 29.

In particular, the cooling channels 48, 49 are configured to allow the passage of refrigeration fluids inside them, such as for example water, emulsions and/or oils.

Embodiments described here with reference to figs. 5 to 12 also concern a method for the production of the component 10.

The method comprises a first step of injecting a first plastic material for the production of the first layer 11 with a first thickness S1;
- a second step of injecting a second plastic material for the production of the second layer 12 with a second thickness S2, greater than the first thickness.

The method provides to inject the first material with first operative parameters, the second material with second operative parameters, different from the first operative parameters.

Thanks to the different and greater thickness of the second layer 12 with respect to the first layer 11, for the production of the second layer 12 it is possible to use lower work parameters of temperatures and pressures, thus improving the stability and brightness of the surfaces, also reducing possible deformations in the post-shrinkage step.

According to some embodiments, the method provides to reciprocally position a punch 29 and a first molding matrix 30 defining a first molding volume V1 between them, and inject the first material into the first volume V1 thus defined. The first molding volume V1 is defined between the contrast surface 32 of the punch 29 and the first molding surface 33, as shown in the right hand portion of fig. 5 and in fig. 9.

The method provides to inject the first material with defined temperature and pressure parameters.

According to some embodiments, the method provides - at least in the case of propylene - to inject the first material with a first temperature T1 comprised between 150 °C and 260 °C.

According to other embodiments, the first temperature T1 is comprised in the range from 120 °C to 240 °C, preferably from 160 °C to 220 °C, even more preferably from 180 °C to 200 °C.

According to one embodiment, the method provides to inject the first material with a first pressure P1 comprised between 700 kg/cm² and 1300 kg/cm².

According to other embodiments, the first pressure P1 can be comprised between 750 kg/cm² and 1250 kg/cm², even more preferably between 800 kg/cm² and 1200 kg/cm².

The first injection step allows to obtain the first layer 11 of the component 10 (figs. 6 and 10).

During the first injection step, the method can comprise the cooling of the first layer 11 to a first cooling temperature T3.

In order to cool the first layer 11 the method can comprise the circulation of refrigerant fluids in the first cooling circuit 46 in order to cool at least one of either the first matrix 30 and/or the punch 29.

According to some embodiments, the method provides to use a first cooling temperature T3 comprised in the range between 35 °C and 55 °C, more preferably between 40 °C and 50 °C.

Subsequently, the method provides to position the punch 29 with the first layer 11 made thereon in the second molding assembly 28, positioning the second matrix 34 so as to define, together with the second surface 14 of the first layer 11, the second molding volume V2.

The second molding volume V2 is defined between the second surface 14 of the first layer 11, which comprises the filling cavities 19, and the second molding surface 35, as shown, for example, in the right hand side of fig. 7 and in fig 11.

The method then comprises a second injection step in which a second plastic material is injected into the second molding volume V2 at a second injection temperature T2 and at a second injection pressure P2.

The second injection step is immediately after the first injection step.

The method provides to use a second temperature T2 lower than the first injection temperature T1.

According to a preferred embodiment, the second injection temperature T2 is comprised in a range from 0.90 to 0.95 times the first injection temperature T1. In other words, the second injection temperature T2 is 5-10% lower than the first injection temperature T1.

The second pressure P2 can advantageously be lower than the first pressure P1.

According to one embodiment, the second pressure P2 can be comprised in a range from 0.70 to 0.90 times the first pressure P1. In other words, the second pressure P2 is 10-30% lower than the first pressure P1.

The second injection step produces the second external layer 12 of the component 10.

During the second injection step, the method comprises the cooling of the second layer 12 to a second cooling temperature T4.

According to some embodiments, in order to cool the second layer 12 the method can comprise the circulation of refrigerant fluids in the second cooling circuit 47 in order to cool at least one of either the second matrix 34 and/or the punch 29 to the second cooling temperature T4.

The second cooling temperature T3 can be between 15% and 25% lower than the first cooling temperature T4.

According to a preferred embodiment, the second cooling temperature T4 can be comprised in the range between 25 °C and 45 °C, more preferably between 30°C and 40°C.

According to other embodiments, the method provides to produce the second external layer 12 with an external surface 15 provided with a three-dimensional finish, comprising an alternation of protruding portions 17 and recessed portions 18.

According to other embodiments, the method provides to make at least one transparent window 22.

In order to make the window 22, the method provides to make an aperture 21, or a slot in the first layer 11, and cover the aperture 21, or slot, with the second material, in this specific case transparent, during the second injection step.

According to some embodiments, at the end of the second injection step, the method comprises decoupling the molding punch 29 and the second molding matrix 35, and extracting the component 10.

### Experimental Examples

The Applicant has carried out experimental tests, verifying that the injection and cooling temperatures T1, T2, T3, T4 and the injection pressures P1 and P2 can be modified, within the ranges considered, as a function of the difference between the thicknesses S1 and S2 of the first layer 11 and of the second layer 12.

Table 1 below shows possible ratios between work temperatures and pressures which can be used in the first and second injection steps, correlated to the ratio between thicknesses S1, S2.

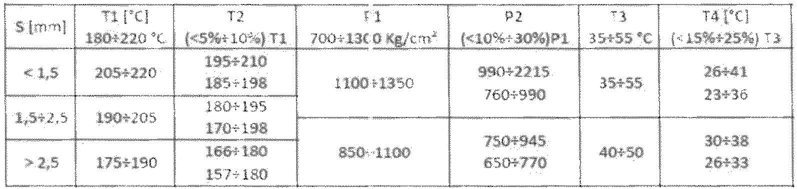

It is clear that modifications and/or additions of parts or steps may be made to the apparatus 26 and to the method as described heretofore, without departing from the field and scope of the present invention.

It is also clear that, although the present invention has been described with reference to some specific examples, a person of skill in the art shall certainly be able to achieve many other equivalent forms of apparatus 26 and method, having the characteristics as set forth in the claims and hence all coming within the field of protection defined thereby.

## Claims

1. Method for the production of a component (10) made of plastic material and having a tubular shape, the component being suitable to form a containing body of a household appliance (50) such as a boiler (50A) or a toaster (50B), comprising:
- a first step of injecting a first plastic material into a first molding volume (V1) defined between a punch (29) and a first matrix (30) with first operative parameters comprising a first injection temperature (T1), and a first injection pressure (P1), to make a first layer (11) having a first thickness (S1);
- a second step of injecting a second plastic material into a second molding volume (V2) defined between said first layer (11) obtained in the first injection step and a second matrix (34) with second operative parameters comprising a second injection temperature (T2), and a second injection pressure (P2), to make a second layer (12) having a second thickness (S2), wherein said second injection step is carried out directly downstream of said first injection step, wherein said second thickness (S2) of said second layer (12) is greater than said first thickness (S1) of said first layer (11), **characterized in that** at least one of either the second injection temperature (T2) is 5-10% lower than the first injection temperature (T1) or the second injection pressure (P2) is, respectively, 10-30% lower than the first injection pressure (P1) **and in that** during said first injection step it provides to cool said first plastic material in said first molding volume (V1) with a first cooling temperature (T3) and during said second injection step it provides to cool said second material in said second molding volume (V2) with a second cooling temperature (T4) between 15% and 25% lower than said first cooling temperature (T3).

2. Method as in claim 1, **characterized in that** said first injection temperature (T1) is comprised in the range from 120° C to 270° C and said second injection temperature (T2) is between 5 and 10% lower than said first injection temperature (T1).

3. Method as in any claim hereinbefore, **characterized in that** said first injection pressure (P1) is comprised in the range from 700 kg/cm² to 1300 kg/cm² and said second injection pressure (P2) is between 10 and 30% lower than said first injection pressure (P1).

4. Method as in claim 3, **characterized in that** said first cooling temperature (T3) is comprised between 35°C and 55°C and that said second cooling temperature (T4) is between 15 and 25% lower than said first cooling temperature (T3).

5. Method as in any claim hereinbefore, **characterized in that** it provides to use a first opaque material, with a color, or a plurality of colors, and a second at least partly transparent material, allowing the first internal opaque layer (11) to be visible through the second transparent external layer (12).

6. Apparatus suitable to perform a method as in any claim 1 to 5 for the production of a component (10) made of plastic material and having a tubular shape suitable to form a containing body of a household appliance (50) such as a boiler (50A) or a toaster (50B), the component comprising a first layer (11) and a second layer (12), said apparatus comprising:
- a first molding assembly (27), comprising a punch (29) and a first matrix (30) having a first molding surface (33), suitable to define between them a first molding volume (V1) having a first width (W1ₘₐₓ), and a first injection unit (31) configured to inject a first plastic material with a first injection pressure (P1) into said first molding volume (V1) and obtain said first layer (11);
- a second molding assembly (28), comprising a second matrix (34) having a second molding surface (35) suitable to define, together with the first layer (11) of said component (10), a second molding volume (V2) having a second width (W2ₘₐₓ), and a second injection unit (36) configured to inject a second plastic material with a first injection pressure (P1) into said second molding volume (V2) and obtain said second layer (12), **characterized in that** said second width (W2ₘₐₓ) is greater than said first width (W1ₘₐₓ) **and that** said first injection unit (31) comprises first heating means (53) configured to heat the first plastic material to a first injection temperature (T1) and the second injection unit (36) comprises second heating means (54) configured to heat the second plastic material to a second injection temperature (T2), wherein at least said first (53) and said second (54) heating means can be activated and adjusted independently of one another and said first molding assembly (27) and said second molding assembly (28) comprise respectively a first cooling circuit (46) and a second cooling circuit (47), independent of each other, and able to be selectively set in order to cool the first material and the second material with respective cooling temperatures (T3, T4).

7. Apparatus as in claim 6, **characterized in that** the ratio between said second width (W2ₘₐₓ) of said second molding volume (V2) and said first width (W1ₘₐₓ) of said first molding volume (V1) is comprised between 1.0 and 2.5.

## Patentansprüche

1. Verfahren zur Herstellung eines Bauteils (10) aus Kunststoff, welches Röhrenform aufweist und zur Bildung eines Gehäuses eines Haushaltsgeräts (50), wie beispielsweise eines Wasserkochers (50A) oder eines Toasters (50B) geeignet ist, umfassend:
- einen ersten Schritt des Einspritzens eines ersten Kunststoffmaterials in ein erstes Formvolumen (V1), das zwischen einem Stempel (29) und einer ersten Matrize (30) definiert ist, mit ersten Betriebsparametern, die eine erste Einspritztemperatur (T1) und einen ersten Einspritzdruck (P1) umfassen, zur Herstellung einer ersten Schicht (11), die eine erste Dicke (S1) aufweist;
- einen zweiten Schritt des Einspritzens eines zweiten Kunststoffmaterials in ein zweites Formvolumen (V2), das zwischen der im ersten Einspritzschritt erhaltenen ersten Schicht (11) und einer zweiten Matrize (34) definiert ist, mit zweiten Betriebsparametern, die eine zweite Einspritztemperatur (T2) und einen zweiten Einspritzdruck (P2) umfassen, zur Herstellung einer zweiten Schicht (12), die eine zweite Dicke (S2) aufweist, wobei der zweite Einspritzschritt direkt nach dem ersten Einspritzschritt durchgeführt wird, wobei die zweite Dicke (S2) der zweiten Schicht (12) größer ist als die erste Dicke (S1) der ersten Schicht (11), **dadurch gekennzeichnet, dass** die zweite Einspritztemperatur (T2) um 5 bis 10 % niedriger ist als die erste Einspritztemperatur (T1) und/oder der zweite Einspritzdruck (P2) um 10 bis 30 % niedriger ist als der erste Einspritzdruck (P1), und dass während des ersten Einspritzschritts das erste Kunststoffmaterial in dem ersten Formvolumen (V1) mit einer ersten Kühltemperatur (T3) gekühlt wird und während des zweiten Einspritzschritts das zweite Material in dem zweiten Formvolumen (V2) mit einer zweiten Kühltemperatur (T4) gekühlt wird, die um 15 bis 25 % niedriger ist als die erste Kühltemperatur (T3).

2. Verfahren nach Anspruch 1, **dadurch gekennzeichnet, dass** die erste Einspritztemperatur (T1) im Bereich von 120 °C bis 270 °C liegt, und die zweite Einspritztemperatur (T2) um 5 bis 10 % niedriger ist als die erste Einspritztemperatur (T1).

3. Verfahren nach irgendeinem der vorstehenden Ansprüche, **dadurch gekennzeichnet, dass** der erste Einspritzdruck (P1) im Bereich von 700 kg/cm² bis 1300 kg/cm² liegt und der zweite Einspritzdruck (P2) um 10 bis 30 % niedriger als der erste Einspritzdruck (P1) ist.

4. Verfahren nach Anspruch 3, **dadurch gekennzeichnet, dass** die erste Kühltemperatur (T3) zwischen 35 °C und 55 °C liegt, und dass die zweite Kühltemperatur (T4) um 15 bis 25 % niedriger ist als die erste Kühltemperatur (T3).

5. Verfahren nach irgendeinem der vorstehenden Ansprüche, **dadurch gekennzeichnet, dass** es vorsieht, ein erstes intransparentes Material mit einer Farbe oder mehreren Farben und ein zweites zumindest teilweise transparentes Material zu verwenden, wodurch die erste innere intransparente Schicht (11) durch die zweite transparente äußere Schicht (12) sichtbar sein kann.

6. Vorrichtung zur Durchführung eines Verfahrens gemäß irgendeinem der Ansprüche 1 bis 5 zur Herstellung eines Bauteils (10) aus Kunststoffmaterial, welches Röhrenform aufweist und zur Bildung eines Gehäuses eines Haushaltsgeräts (50), wie beispielsweise eines Wasserkochers (50A) oder eines Toasters (50B) geeignet ist, wobei das Bauteil eine erste Schicht (11) und eine zweite Schicht (12) umfasst, wobei die Vorrichtung umfasst:
- eine erste Formanordnung (27) umfassend einen Stempel (29) und eine erste Matrize (30) mit einer ersten Formfläche (33), die geeignet sind, zwischen sich ein erstes Formvolumen (V1) mit einer ersten Breite (W1ₘₐₓ) zu definieren, und eine erste Einspritzeinheit (31), die so konfiguriert ist, dass sie ein erstes Kunststoffmaterial mit einem ersten Einspritzdruck (P1) in das erste Formvolumen (V1) einspritzt, um die erste Schicht (11) zu erhalten,
- eine zweite Formanordnung (28) umfassend eine zweite Matrize (34) mit einer zweiten Formfläche (35), die geeignet ist, zusammen mit der ersten Schicht (11) des Bauteils (10) ein zweites Formvolumen (V2) mit einer zweiten Breite (W2ₘₐₓ) zu definieren, und eine zweite Einspritzeinheit (36), die so konfiguriert ist, dass sie ein zweites Kunststoffmaterial mit einem ersten Einspritzdruck (P1) in das zweite Formvolumen (V2) einspritzt, um die zweite Schicht (12) zu erhalten, **dadurch gekennzeichnet, dass** die zweite Breite (W2ₘₐₓ) größer ist als die erste Breite (W1ₘₐₓ), **und dass** die erste Einspritzeinheit (31) erste Heizmittel (53) umfasst, die so konfiguriert sind, dass sie das erste Kunststoffmaterial auf eine erste Einspritztemperatur (T1) erwärmen, und die zweite Einspritzeinheit (36) zweite Heizmittel (54) umfasst, die so konfiguriert sind, dass sie das zweite Kunststoffmaterial auf eine zweite Einspritztemperatur (T2) erwärmen, wobei zumindest die ersten Heizmittel (53) und die zweiten Heizmittel (54) unabhängig voneinander aktiviert und eingestellt werden können, und die erste Formanordnung (27) und die zweite Formanordnung (28) einen ersten Kühlkreislauf (46) bzw. einen zweiten Kühlkreislauf (47) umfassen, die voneinander unabhängig sind und selektiv eingestellt werden können, um das erste Material und das zweite Material mit den jeweiligen Kühltemperaturen (T3, T4) zu kühlen.

7. Vorrichtung nach Anspruch 6, **dadurch gekennzeichnet, dass** das Verhältnis zwischen der zweiten Breite (W2ₘₐₓ) des zweiten Formvolumens (V2) und der ersten Breite (W1ₘₐₓ) des ersten Formvolumens (V1) 1.0 bis 2.5 beträgt.

## Revendications

1. Procédé pour la production d'un composant (10) en matière plastique et présentant une forme tubulaire, le composant étant adapté à la formation d'un corps contenant d'un appareil ménager (50) tel qu'une bouilloire (50A) ou un grille-pain (50B), comprenant :
- une première étape d'injection d'une première matière plastique dans un premier volume de moulage (V1) défini entre un emporte-pièce (29) et une première matrice (30) avec des premiers paramètres de fonctionnement comprenant une première température d'injection (T1) et une première pression d'injection (P1), pour réaliser une première couche (11) présentant une première épaisseur (S1) ;
- une seconde étape d'injection d'une seconde matière plastique dans un second volume de moulage (V2) défini entre ladite première couche (11), obtenue à la première étape d'injection, et une seconde matrice (34) avec des seconds paramètres de fonctionnement comprenant une seconde température d'injection (T2) et une seconde pression d'injection (P2), pour réaliser une seconde couche (12) présentant une seconde épaisseur (S2), dans lequel ladite seconde étape d'injection est réalisée directement en aval de ladite première étape d'injection, dans lequel ladite seconde épaisseur (S2) de ladite seconde couche (12) est supérieure à ladite première épaisseur (S1) de ladite première couche (11), **caractérisé en ce qu'**au moins l'une ou l'autre de la seconde température d'injection (T2) est 5-10 % plus basse que la première température d'injection (T1) ou la seconde pression d'injection (P2) est, respectivement, 10-30 % plus basse que la première pression d'injection (P1) **et en ce que** pendant ladite première étape d'injection, le procédé comprend le refroidissement de ladite première matière plastique dans ledit premier volume de moulage (V1) avec une première température de refroidissement (T3) et pendant ladite seconde étape d'injection, le procédé comprend le refroidissement de ladite seconde matière dans ledit second volume de moulage (V2) avec une seconde température de refroidissement (T4) entre 15 % et 25 % plus basse que ladite première température de refroidissement (T3).

2. Procédé selon la revendication 1, **caractérisé en ce que** ladite première température d'injection (T1) est comprise dans la plage de 120 °C à 270 °C et ladite seconde température d'injection (T2) est entre 5 et 10 % plus basse que ladite première température d'injection (T1).

3. Procédé selon une quelconque revendication précédente, **caractérisé en ce que** ladite première pression d'injection (P1) est comprise dans la plage de 700 kg/cm² à 1300 kg/cm² et ladite seconde pression d'injection (P2) est entre 10 et 30 % plus basse que ladite première pression d'injection (P1).

4. Procédé selon la revendication 3, **caractérisé en ce que** ladite première température de refroidissement (T3) est comprise entre 35 °C et 55 °C et **en ce que** ladite seconde température de refroidissement (T4) est entre 15 et 25 % plus basse que ladite première température de refroidissement (T3).

5. Procédé selon une quelconque revendication précédente, **caractérisé en ce qu'**il comprend l'utilisation d'une première matière opaque, d'une certaine couleur, ou d'une pluralité de couleurs, et d'une seconde matière au moins partiellement transparente, permettant à la première couche opaque interne (11) d'être visible à travers la seconde couche externe transparente (12).

6. Appareil approprié pour mettre en œuvre un procédé selon l'une quelconque des revendications 1 à 5 pour la production d'un composant (10) en matière plastique et présentant une forme tubulaire adaptée à la formation d'un corps contenant d'un appareil ménager (50) tel qu'une bouilloire (50A) ou un grille-pain (50B), le composant comprenant une première couche (11) et une seconde couche (12), ledit appareil comprenant :
- un premier ensemble de moulage (27), comprenant un emporte-pièce (29) et une première matrice (30) présentant une première surface de moulage (33), appropriés pour définir entre eux un premier volume de moulage (V1) présentant une première largeur (W1ₘₐₓ), et une première unité d'injection (31) configurée pour injecter une première matière plastique avec une première pression d'injection (P1) dans ledit premier volume de moulage (V1) et obtenir ladite première couche (11) ;
- un second ensemble de moulage (28), comprenant une seconde matrice (34) présentant une seconde surface de moulage (35) appropriée pour définir, avec la première couche (11) dudit composant (10), un second volume de moulage (V2) présentant une seconde largeur (W2ₘₐₓ), et une seconde unité d'injection (36) configurée pour injecter une seconde matière plastique avec une première pression d'injection (P1) dans ledit second volume de moulage (V2) et obtenir ladite seconde couche (12), **caractérisé en ce que** ladite seconde largeur (W2ₘₐₓ) est plus grande que ladite première largeur (W1ₘₐₓ) **et en ce que** ladite première unité d'injection (31) comprend des premiers moyens de chauffage (53) configurés pour chauffer la première matière plastique à une première température d'injection (T1) et la seconde unité d'injection (36) comprend des seconds moyens de chauffage (54) configurés pour chauffer la seconde matière plastique à une seconde température d'injection (T2), dans lequel au moins lesdits premiers moyens de chauffage (53) et lesdits seconds moyens de chauffage (54) peuvent être activés et réglés indépendamment les uns des autres et ledit premier ensemble de moulage (27) et ledit second ensemble de moulage (28) comprennent respectivement un premier circuit de refroidissement (46) et un second circuit de refroidissement (47), indépendants l'un de l'autre, et pouvant être sélectivement paramétrés afin de refroidir la première matière et la seconde matière avec des températures de refroidissement respectives (T3, T4).

7. Appareil selon la revendication 6, **caractérisé en ce que** le rapport entre ladite seconde largeur (W2ₘₐₓ) dudit second volume de moulage (V2) et ladite première largeur (W1ₘₐₓ) dudit premier volume de moulage (V1) est compris entre 1.0 et 2.5.
